# EUROPEAN PATENT APPLICATION

(11) **EP 3 680 411 A1**
(43) Date of publication of application: **15.07.2020**
(21) Application number: 20150431.3
(22) Date of filing: 07.01.2020
(51) Int. Cl.: E04B 2/96, F16B 7/04, F16B 2/18, F16B 1/00

(54) **KIT FOR MOUNTING A CROSSPIECE BETWEEN TWO UPRIGHTS**

(30) Priority: 09.01.2019 IT 201900000307
(71) Applicant: L.M. DEI F.LLI MONTICELLI - S.R.L., 60027 Osimo (AN) (IT)
(72) Inventor: MONTICELLI, VLADIMIRO, 60024 FILOTTRANO (AN) (IT)
(74) Representative: Baldi, Claudio

(57) **Abstract**

A kit for mounting a crosspiece (3) between a first upright (1) and a second upright (2) is disclosed, together with a process for using said kit; the kit comprises a mounting device (100, 200) that is fixed to one of said two uprights (1, 2) and guides the insertion of the crosspiece (3) between the two uprights (1, 2); the mounting device (100, 200) comprises horizontal centering means (O) for horizontally centering the mounting device (100, 200) relative to an upright (1, 2), a locking means suitable for locking said mounting device (100; 200) to said upright (1, 2); a vertical centering button (5) for vertically centering the mounting device (100, 200) relative to the upright (1, 2) and a support surface (71, 72) that supports the crosspiece (3) during the insertion of the crosspiece (3) between the two uprights (1, 2).

## Description

The present patent application for industrial invention relates to a kit for mounting a crosspiece between two uprights.

The peculiarities and the advantages of the invention will be more evident after a short description of the prior art and of its drawbacks.

The mounting operation of the present invention provides for fixing a crosspiece between two uprights by inserting two buttons for each end of the crosspiece inside holes obtained on a first upright and on a second upright.

In particular, according to the prior art, the crosspiece comprises two ends, wherein a pair of buttons is disposed, each button sliding along an axis parallel to the axis of the crosspiece; both the first and the second button of said pair of buttons can be completely retracted inside the crosspiece when pressed towards the crosspiece.

In view of the above, each upright comprises a first hole and a second hole disposed in horizontal coplanar position and wherein said buttons are suitable for being inserted.

Alternatively, the holes may be non-coplanar and staggered, and likewise the crosspiece may comprise two non-coplanar buttons.

It must be noted that the term "first" refers to the button of the crosspiece and to the hole of the upright that are near to a user during the insertion of the upright, whereas the term "second" refers to the button of the crosspiece and to the hole of the upright that are distant from the user during the insertion of the upright.

Said buttons and said holes act as fixing means to fix the ends of said crosspiece to the two uprights between which the crosspiece is to be disposed and locked; said fixing means are designed in such a way that the length of the crosspiece is identical to the distance between the opposite sides of the two uprights between which the crosspiece is exactly positioned.

In view of the above, said buttons must be capable of being completely retracted in order not to protrude from the ends of the crosspiece during the insertion of the crosspiece between the two uprights, in order to be automatically inserted in the corresponding hole as soon as the buttons and the holes are disposed in coaxial position.

After fixing the uprights at a distance that is identical to the length of the crosspiece, the mounting operation of the crosspiece between the two uprights provides for disposing the crosspiece in horizontal position and inserting the crosspiece between the two uprights, making the crosspiece translate along a direction that is perpendicular to the opening that is laterally defined by the two uprights.

In view of the above, it will be necessary to press the second buttons disposed on the two ends of the crosspiece in order for the two ends of the crosspiece to start sliding against the opposite surfaces of the two uprights; then, it will be necessary to press also the first buttons in order to complete the sliding of the crosspiece between the two uprights until the crosspiece is in locking position.

As soon as all buttons of the crosspiece are aligned with the holes, said buttons will be automatically released under the thrust of the elastic member provided in said buttons.

In spite of being very popular, it must be noted that such a mounting technique is impaired by some drawbacks.

Evidently, if the length of the crosspiece increases, such a mounting technique is extremely complicated for a single operator, who needs to support the crosspiece near its center of gravity, at a long distance from the ends with the protruding buttons, In view of the above, it would be practically impossible for the operator to manually press the buttons in order to insert the crosspiece between the two uprights.

For this reason, the mounting operation of said crosspiece requires the presence of two operators. In this way, each operator can support the end of the crosspiece, can easily press the buttons disposed in the end that is being supported, and can check that the height where the crosspiece is inserted is correct both during the insertion and the locking of the crosspiece.

Another drawback that must be absolutely avoided consists in the insertion of the two second buttons in the first holes of the uprights instead of the second holes of the uprights. More precisely, the crosspiece must be precisely inserted by a user at a suitable height so that, during the sliding of the crosspiece between the two uprights, the second buttons are never aligned with the first holes. Moreover, after completely inserting the crosspiece between the two uprights, the user must move the crosspiece vertically in order to correctly align the four buttons with the corresponding holes before completely the mounting and locking operation of the crosspiece.

It must be noted that crosspiece-uprights assemblies are known, wherein each end of the crosspiece only comprises one button that is suitable for being inserted in a hole obtained in each upright. In the aforementioned assemblies, after the crosspiece is inserted between the two uprights and is positioned in such a way that each button is released inside the corresponding hole, it is necessary to hold the correct position of the crosspiece in place with one or more screws, usually self-tapping screws, to connect the end of the crosspiece to the adjacent upright.

Evidently, all the aforementioned drawbacks are encountered also in this case, except for the one caused by the provision of two identical coplanar buttons.

GB2159230 discloses a kit for mounting a crosspiece between two uprights according to the preamble of claim 1.

WO2015/164985 discloses a method for connecting a beam to an upright. The beam comprises a front side with a recess and the upright comprises a longitudinal side with projections configured in such a way to be suitably inserted into the recess of the beam by means of a relative movement between the beam and the upright.

US5042216 discloses a locking element for a facade structure of a building.

US9567746 discloses a continuous façade system.

The purpose of the present invention is to remedy the drawbacks of the prior art, by disclosing a kit for mounting a crosspiece between two uprights that can be used by only one operator to easily mount the crosspiece without making any mistake.

Another purpose of the present invention is to disclose a kit that permits the safe, easy insertion and mounting of the crosspiece between the two uprights.

These purposes are achieved according to the invention with the characteristics of the independent claim 1.

Advantageous embodiments appear from the dependent claims.

The kit for mounting a crosspiece between two uprights according to the invention is defined by claim 1.

For the sake of clarity, the description of the kit according to the invention continues with reference to the appended drawings, which have a merely illustrative, not limiting value, wherein:
- Fig. 1 is an axonometric view of a mounting device of the kit according to the invention.
- Fig. 2 is a side view of the mounting device of Fig. 1;
- Fig. 3 is a top view of the mounting device fixed to an upright, wherein said mounting device and said upright are sectioned along a horizontal plane;
- Fig. 3A is an axonometric view of the pin of the locking means of the mounting device according to the invention;
- Fig. 3B is a view of the pin of Fig. 3A seen from a different angle;
- Fig. 3C is an enlarged view of the detail enclosed in the circle D of Fig. 3.
- Fig. 4 is an axonometric view of the first mounting device and of the second mounting device connected to the first upright and to the second upright;
- Fig. 5 is a front view of the mounting devices and of the uprights of Fig. 4;
- Figs. 6, 7 and 8 are axonometric views of the locking steps of one of the mounting devices of the kit;
- Figs. 6A and 8A are enlarged sectional views, seen from above, of Figs. 6 and 8, respectively;
- Fig. 9 is an axonometric view that shows the crosspiece supported by the two mounting devices, with all buttons in extracted position;
- Fig. 9A is a top view of the crosspiece and of the uprights of Fig. 9;
- Fig. 10 is a cross-sectional side view of the crosspiece; wherein the crosspiece is supported by the first raised support surface and has just ejected the centering button out of its housing;
- Fig. 11 is the same as Fig.10, except for the fact that the crosspiece is almost completely disposed between the two uprights and is slightly inclined forward;
- Fig. 12 is the same as Fig. 11, except for the fact that the crosspiece is disposed in locking position and is supported on the second support surface.

The kit of the invention has been devised to mount a crosspiece (3) between a first upright (1) and a second upright (2).

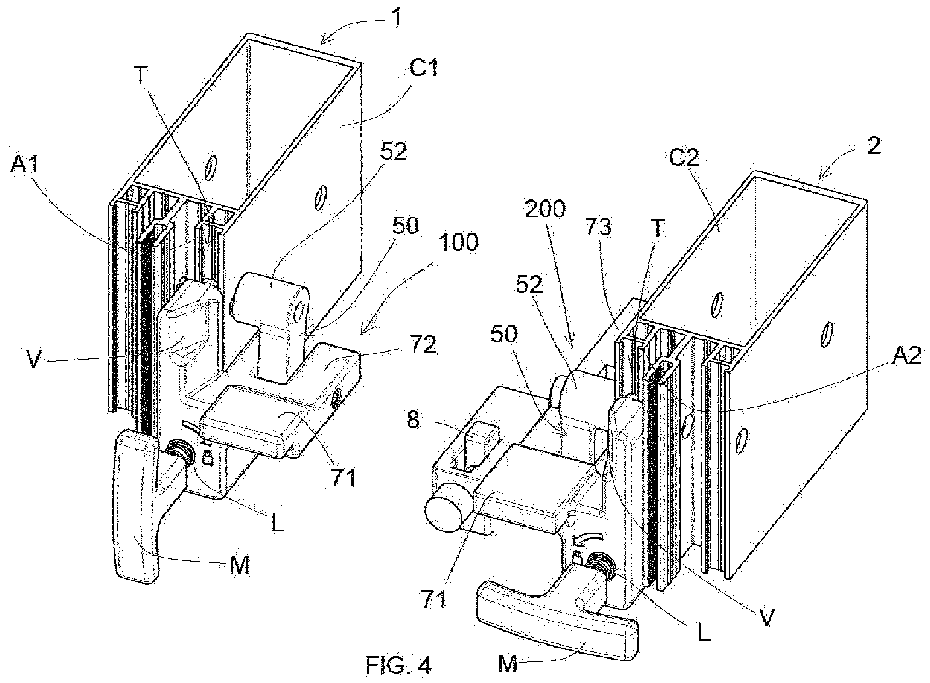

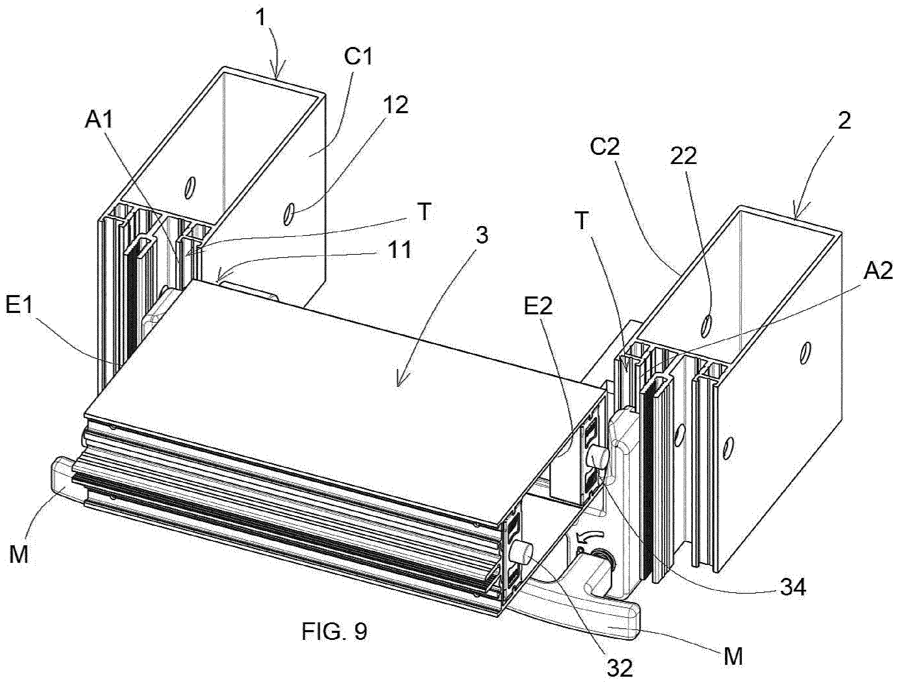

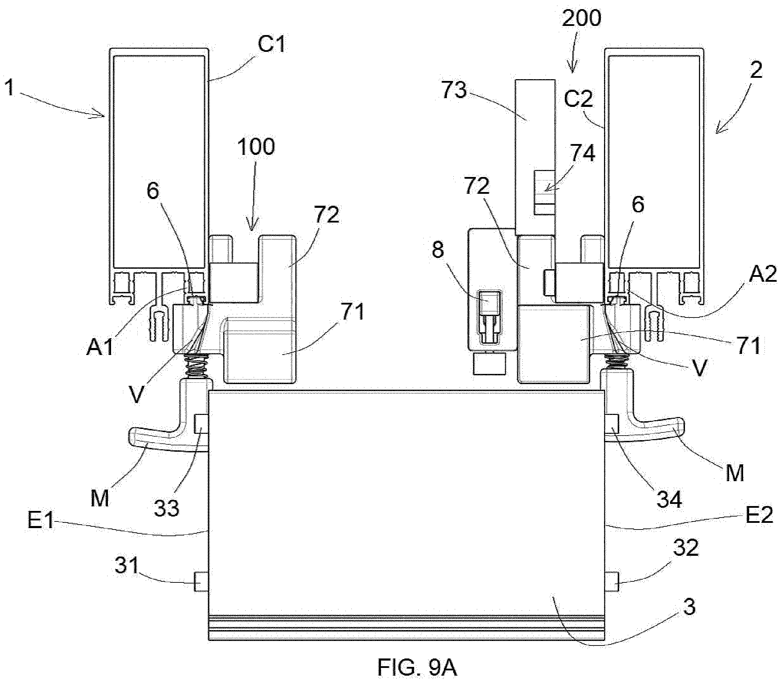

With reference to Figs. 4 and 9, the crosspiece (3) and the uprights (2, 3) are sections with a cross-section.

With reference to Figs. 4 and 9, each upright (1; 2) comprises a connection wall (C1, C2) that is directed towards the connection wall (C1, C2) of the other upright (1; 2).

A pair of holes is obtained on the connection wall (C1, C2) of each upright (1; 2), of which a first hole (11, 21) and a second hole (12, 22) in horizontal coplanar position.

Each upright (1, 2) also comprises a fixing wall (A1, A2), which is shown in front position in Figs. 4 and 9.

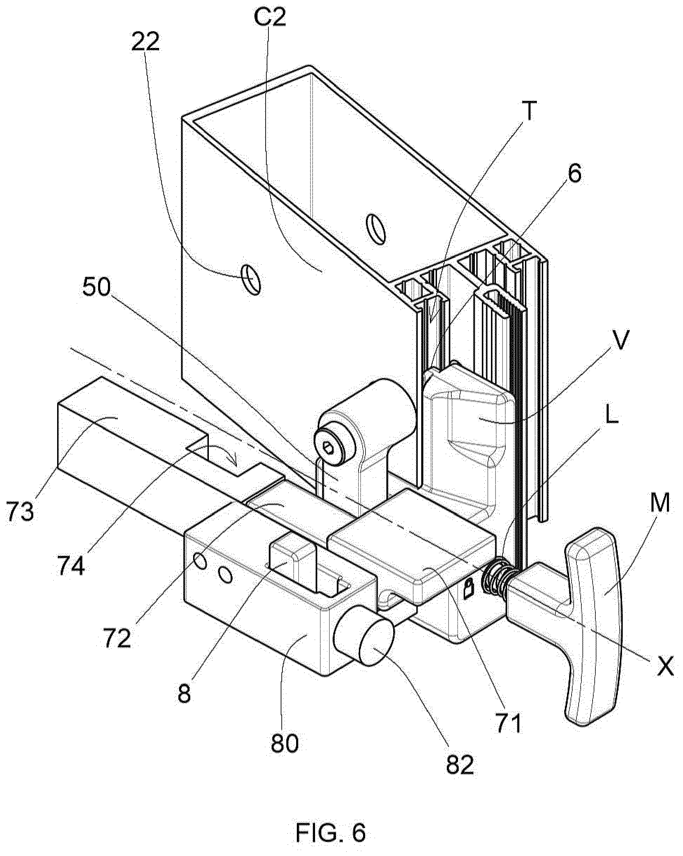

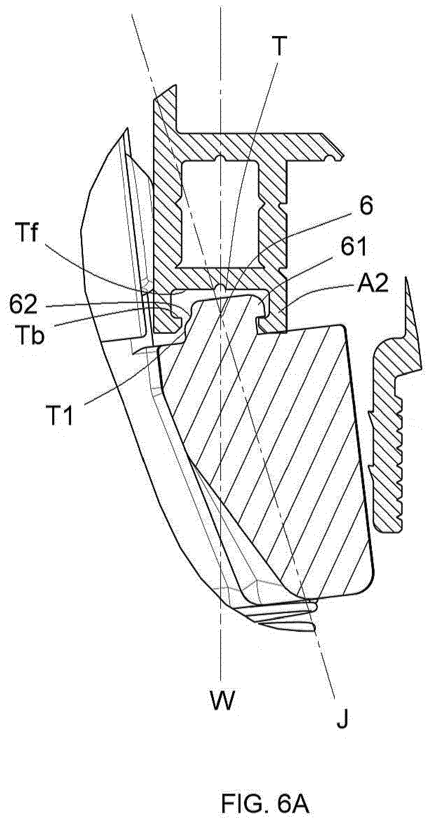

The fixing wall (A1, A2) comprises a T-shaped vertical longitudinal groove (T) that comprises a narrow inlet (T1). With reference to Fig. 6A, the vertical longitudinal groove comprises a bottom wall (Tf) and a stop wall (Tb) that is directed towards said bottom wall (Tf) and defines said inlet (T1).

The crosspiece (3) comprises a first end (E1) suitable for being stopped against the connection wall (C1) of the first upright (1), and a second end (E2) suitable for being stopped against the connection wall (C2) of the second upright (2).

With reference to Fig. 9A, each end (E1, E2) comprises a first button (31, 32) and a second button (33, 34), each of them protruding from the end (E1, E2), being pushed towards the exterior of the crosspiece (3) under the thrust of an elastic member provided in said buttons (31, 32, 33, 34).

The first button (31) and the second button (33) of the first end (E1) are suitable for being inserted in the first hole (11) and in the second hole (12) obtained on the connection wall (C1) of the first upright (1). Likewise, the first button (32) and the second button (34) of the second end (E2) are suitable for being inserted in the first hole (21) and in the second hole (22) obtained on the connection wall (C2) of the second upright (2).

In spite of the fact that in the Figures each end (E1, E2) of the crosspiece (3) comprises two buttons (31, 32, 33, 34) and each connection wall (C1, C2) of the uprights (1, 2) comprises two holes (11, 12, 21, 22), the ends (E1, E2) of the crosspiece (3) and the connection walls (C1, C2) can comprise only one button (31, 32, 33, 34) and only one hole (11, 12, 13, 14), respectively.

The kit for mounting said crosspiece (3) between the two uprights (1, 2) comprise two mounting devices (100, 200), of which a first mounting device (100) fixed to the first upright (1) and a second mounting device (200) fixed to the second upright (2), to guide the insertion of the crosspiece (3) between the two uprights (1, 2) for easier installation.

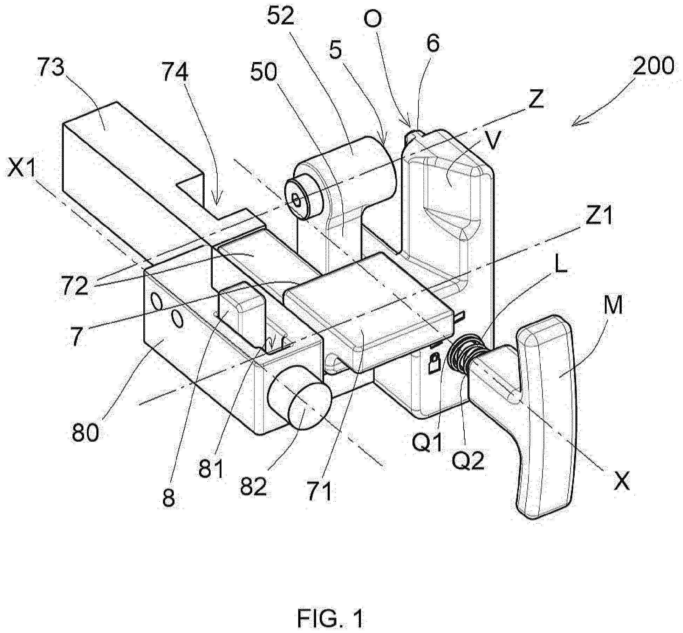

With reference to Figs. 1, 2 and 6A, each mounting device (100, 200) comprises horizontal centering means (O) for horizontally centering the mounting device (100, 200) relative to the upright (1, 2) where it is fixed.

With reference to Fig. 6A, the horizontal centering means (O) consist in a slider (6) that is configured in such a way to slide inside the T-shaped vertical longitudinal groove (T) of the fixing wall (A1, A2) of the first upright (1) and of the second upright (2). It must be noted that the slider (6) is integral with the mounting device (100, 200) and therefore permits the longitudinal sliding of the mounting device (100, 200) along the upright (1, 2).

With reference to Fig. 6A, the slider (6) comprises a tooth (61) that projects radially from said slider (6), and a recess (62) obtained in diametrically opposite position to said tooth (61).

The recess (62) permits the insertion of the slider (6) inside the vertical longitudinal groove (T) if the axis (J) of the slider (6) is inclined relative to an axis (W) orthogonal to the bottom wall (Tf) (as shown in Fig. 6A).On the contrary, the tooth (61) prevents the slider (6) from being extracted from the vertical longitudinal groove (T) when said slider (6) is directed with the axis (J) that coincides with said orthogonal axis (W) of the bottom wall (Tb). In such a case, in fact, such an extraction is prevented by the stop wall (Tb) against which said tooth (61) is stopped. It must be noted that the slider (6) can have a different configuration according to the configuration of the groove where it slides.

Each mounting device (100) also comprises a stop surface (60) whereon said slider (6) is obtained; the stop surface (60) is suitable for being stopped against the fixing wall (A1, A2) of the upright (1, 2).

The mounting device (100, 200) also comprises a locking means suitable for locking the mounting device (100, 200) to the upright (1, 2).

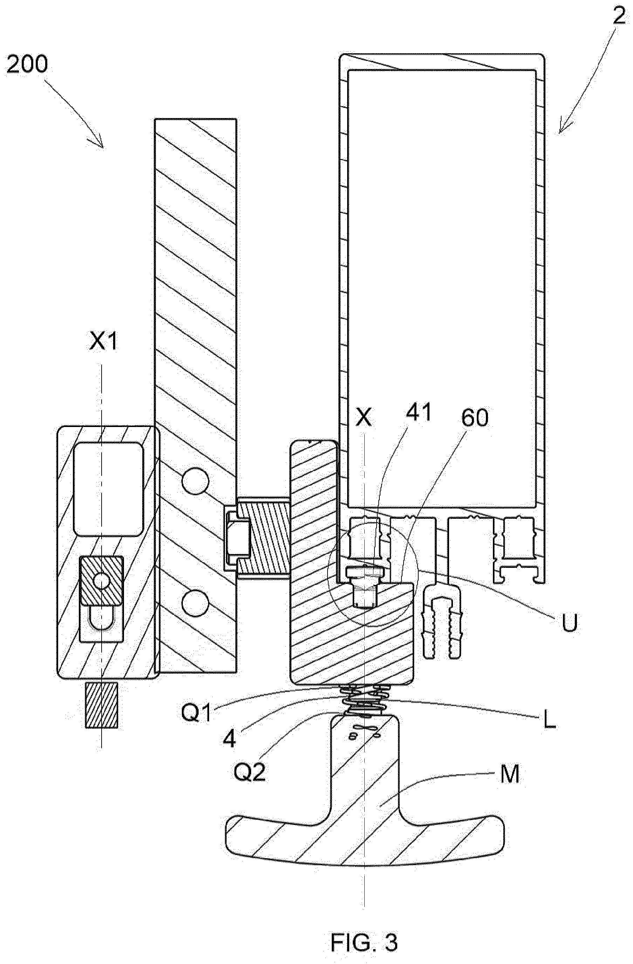

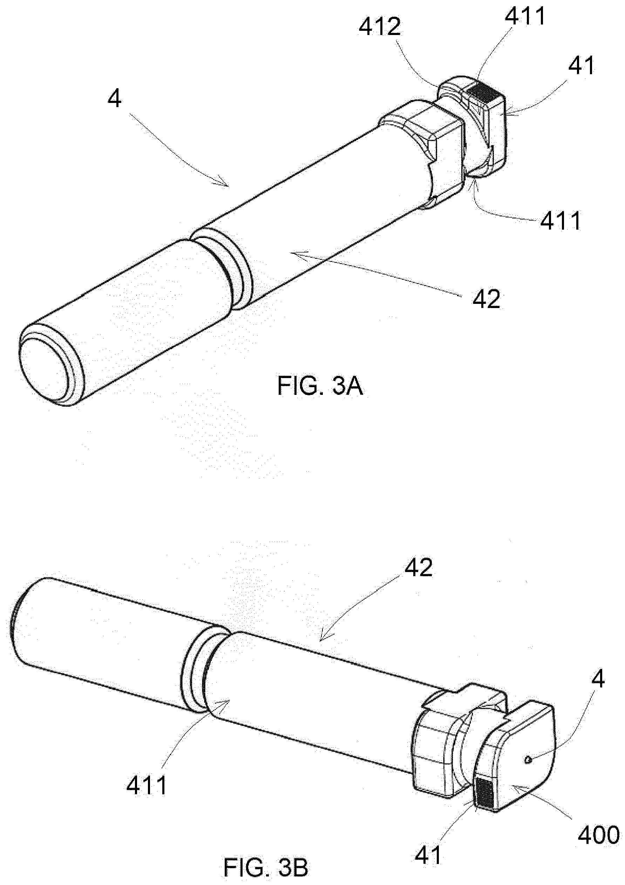

With reference to Fig. 3A, the locking means comprises a pin (4) with a body (42) and a head (41) provided with a radial striker (411). With reference to Fig. 3A, a radial striker (411) is a portion that protrudes radially from the head (41). In particular, the head (41) comprises two of said radial strikers (411) disposed in opposite portions of the head (41).

The head (41) is centrally provided with a protuberance (400).

The pin (4) is inserted in a through hole that ends in said stop surface (60).

Said pin (4) is inserted inside the hole with possibility of rotating around an axis (X) and translating along the same axis (X).

Advantageously, each mounting device (100, 200) comprises an activation means for said locking means in such a way that the locking means can go from a first position, wherein the locking means does not lock the mounting device (100, 200) to the upright (1, 2), to a second position, wherein the locking means locks the mounting device (100, 200) to said upright (1, 2). The activation means comprises a knob (M) connected to the pin (4).

Moreover, the mounting device (100, 200) comprises a spiral spring (L) that is wound around the pin (4) and is disposed between the mounting device and the knob (M). More precisely, the spring (L) comprises an end (Q1) in contact with a perimeter edge that defines the through hole wherein the pin is inserted, and another end (Q2) in contact with the knob (M).

The mounting device (100, 200) is locked on the upright (1, 2) by pressing the knob (M) towards the upright (1, 2) in such a way that the head (41) of the pin (4) is inserted in the vertical longitudinal groove (T) of the fixing wall of the upright (1, 2), and rotating the knob (M) in such a way that the radial striker (411) is stopped against the stop wall (Tb).

The radial striker (411) has a flared portion (412) that acts as invitation for the radial striker (411) in order to be inserted in the stop wall (Tb) of the vertical longitudinal groove (T).

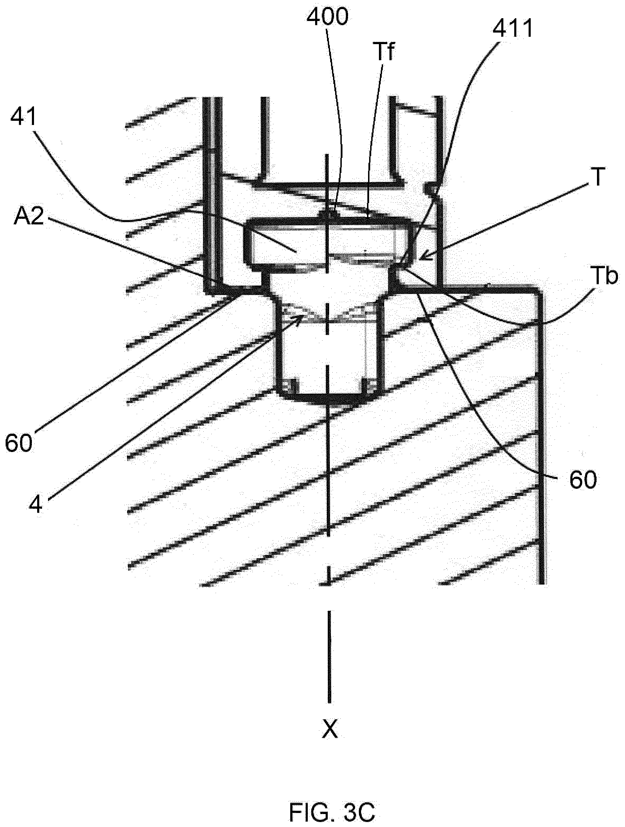

The radial striker (411) slides against the stop wall (Tb) during the rotation. Such a sliding movement pushes the pin (4) towards the upright (1, 2). Under the action of the pin (4), the protuberance (400) of the head (41) strikes the bottom wall (Tf) (as shown in Fig. 3C).

Such an action makes the axes (W) and (J) coaxial, and the tooth (61) of the slider (6) is stopped against the stop wall (Tb), thus preventing the mounting device (100, 200) from leaving the vertical longitudinal groove (T).

The simultaneous action of the head (41) of the pin (4) on the bottom wall (Tf), and of the tooth (61) of the slider (6) on the stop wall (Tb) permits to lock the mounting device (100, 200), preventing movements along the vertical longitudinal groove (T) and along an orthogonal direction to the bottom wall (Tf).

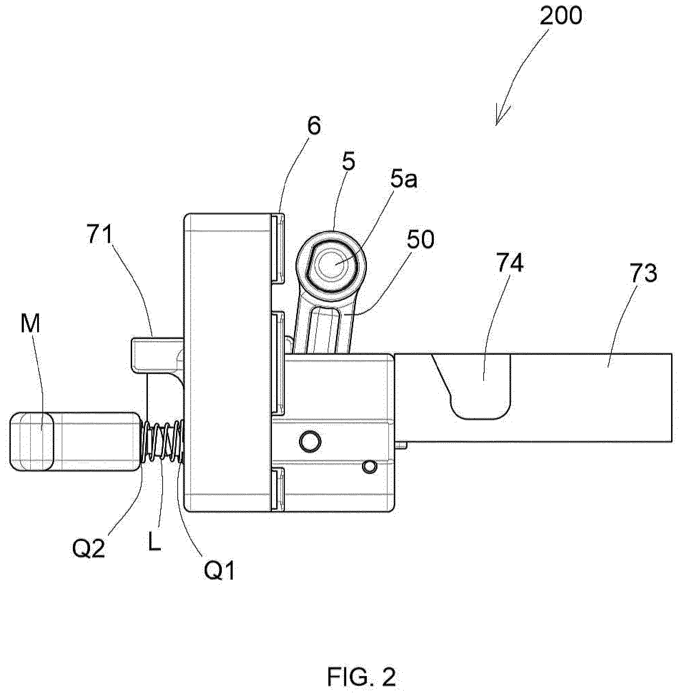

With reference to Fig. 2, each mounting device (100, 200) comprises a centering button (5) that slides along an axis (Z) perpendicular to the axis (X) of the pin (4). The centering button (5) is configured in such a way to be inserted in the first hole (11, 21) of the connection wall (C1, C2) of the upright (1, 2).

The mounting device (100, 200) comprises a mobile lever (50), which comprises a first end (51) hinged to the mounting device (100, 200) by means of a hinging pin with an axis of rotation (Z1) parallel to the axis (Z) of the centering button (5), and a second end (52) provided with said centering button (5).

The centering button (5) acts as vertical centering means for vertically centering the mounting device (100, 200) to the upright (1, 2).

The centering button (5) comprises an end (5a) suitable for being inserted in the first hole (11, 21) of the connection wall (C1, C2). The end (5a) is flared and shaped like a striker of a door lock in such a way to permit the disengagement of the centering button (5) by gently pushing the centering button (5).

With reference to Figs. 1, 4, 6, 7 and 8, each mounting device (100, 200) comprises a first raised support surface (71) that supports the crosspiece (3) during the insertion of the crosspiece (3) between the two uprights (1, 2), as well as a second support surface (72), wherein the crosspiece (3) is supported when the cross-piece (3) is fixed to the two uprights (1, 2).

The first raised support surface (71) and the second support surface (72) are joined by a step (7).

With reference to Fig. 1, 6, 7 and 8, the second mounting device (200) also comprises an additional support surface (73) disposed in coplanar position as a continuation of said second support surface (72).

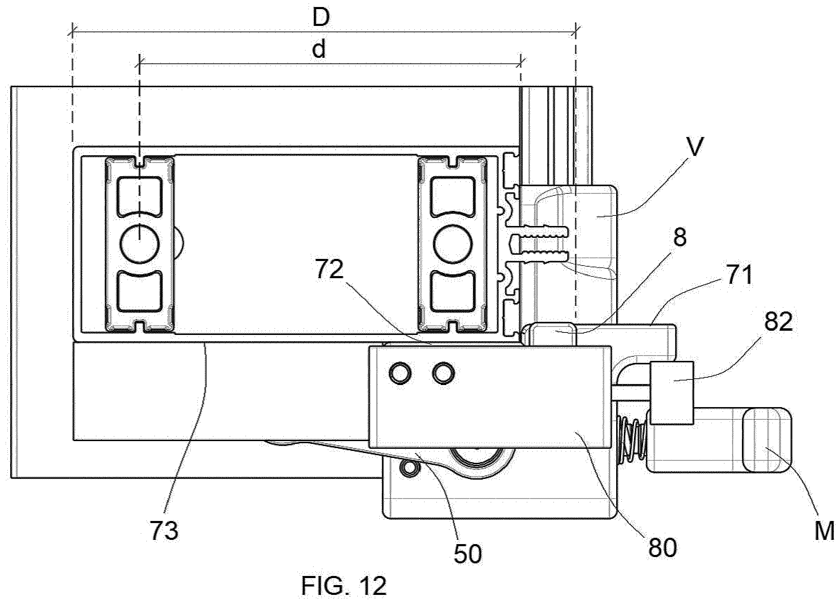

As shown in Fig.12, the second support surface (72) and the additional support surface (73) have a total length (D) that is higher than the distance (d) between the second hole (12, 22) of the connection wall (C1, C2) and the fixing wall (A2).

In view of the above, the second support surface (72) and the additional support surface (73) form a support base that constantly supports said crosspiece (3) during the insertion of the crosspiece (3) between the two uprights (1, 2).

With reference to Fig. 1, 7 and 8, the additional support surface (73) comprises a notch (74) suitable for receiving the end (52) of the lever (50) when the end (52) is disposed under the additional support surface (73).

It must be noted that, if each upright (1, 2) comprises only one hole and the crosspiece (3) comprises only one button for each end (E1, E2), the provision of two support surfaces on different planes is not necessary, it being sufficient to provide only one support surface that acts as support during the entire insertion of the crosspiece (3) between the two uprights (1, 2).

Evidently, the provision of only one support surface is also sufficient when the uprights (1, 2) comprise two non-coplanar holes and the crosspiece is provided with non-coplanar buttons.

With reference to Fig. 1, 4 and 5 the second mounting device (200) comprises a safety button (8) disposed next to the first raised support surface (71) and to the second support surface (72).

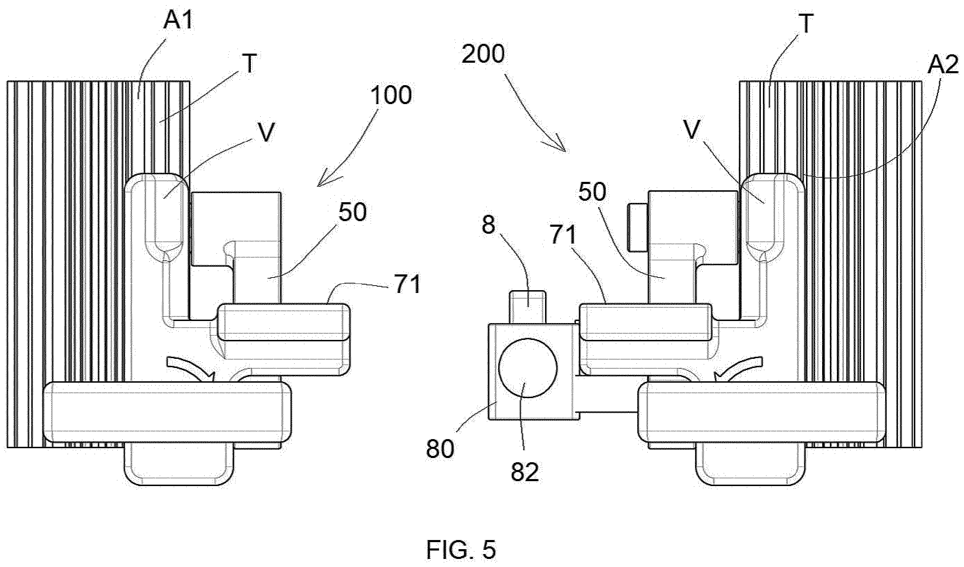

Although in Figs. 4 and 5 the safety button (8) is exclusively provided in said second mounting device (200), according to an alternative embodiment of the invention the two mounting devices (100, 200) can be provided with the safety button (8).

The safety button is disposed on a box body (80) provided with a groove (81) wherein the button slides along an axis (X1) parallel to the axis (X) between a retracted position, wherein said safety button (8) is disposed next to said second support surface (72); and an advanced position, wherein said safety button (8) is disposed next to said first raised support position (71).

The safety button (8) is firmly maintained in the retracted position by means of retention means, and can be moved from the retracted position to the advanced position by means of a knob (82).

Alternatively, although not shown in the appended Figures, the safety button (8) can be constantly disposed next to the second support surface (72) without the possibility of sliding along a seat.

According to such an alternative embodiment, the safety button (8) must be housed in a seat with axis orthogonal to the first raised support surface (71) and to the second raised support surface (72). The safety button (8) is slidingly inserted in said seat in such a way to slide between an operating position, wherein the safety button (8) projects from above relative to said first raised support surface (71), and an idle position, wherein said safety button (8) is flush or disposed under said second support surface (72). In such a case, the safety button (8) is maintained in the operating position by means of a thrust means and is moved to the idle position by pressing said safety button (8).

Each mounting device (100, 200) preferably comprises an invitation surface (V) configured in such a way to be intercepted by the two mobile buttons (31, 32, 33, 34) during the insertion of the crosspiece (3) between the two uprights (1, 2) so that the mobile buttons (31, 32, 33, 34) are completely retracted inside the crosspiece (3).

With reference to Figs. 6 to 12, a process for mounting a crosspiece (3) between two uprights (1, 2) using the kit of the invention is disclosed.

Although Figs. 6, 7 and 8 illustrate the centering and locking of the second mounting device (200) on the second upright (2), these operations can be also used to center and lock the first mounting device (100).

First of all, the process provides for fixing the first mounting device and the second mounting device (100, 200) on the first upright and on the second upright (1, 2).

The fixing of the first mounting device (100) to the first upright (1) provides for initially performing a horizontal centering step, wherein the slider (6) of the horizontal centering means (O) of the first mounting device (100) is inserted in the vertical longitudinal groove (T) of the first upright (1). After the horizontal centering step, a vertical centering step is performed, wherein the centering button (5) of the first mounting device (100) is inserted in the first hole (11) of the connection wall (C1) of the first upright (1), causing the upward or downward sliding of the slider (6) inside said vertical longitudinal groove (T) .After the vertical centering step, a locking step is performed, wherein the first mounting device (100) is locked to the first upright, causing the 90° rotation of the pin (4) of the locking means of the first mounting device (100).

Now, having fixed the first mounting device (100) to the first upright (1), the second mounting device (200) can be fixed to the second upright (2).

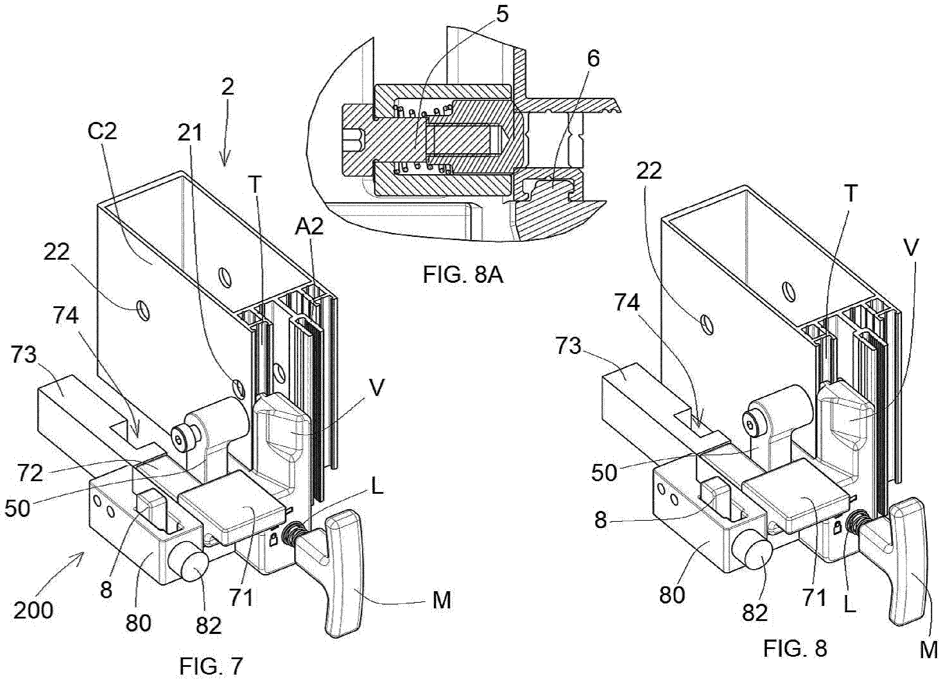

The fixing of the second mounting device (200) to the second upright (2) provides for initially performing a horizontal centering step, wherein the slider (6) of the horizontal centering means (O) of the second mounting device (200) is inserted in the vertical longitudinal groove (T) of the second upright (2), as shown in Fig. 6. After horizontally centering the second mounting device (200) relative to the second upright (2), a vertical centering step is performed (as shown in Figs. 7 and 8), wherein the centering button (5) of the second mounting device (200) is inserted in the first hole (21) of the connection wall (C2) of the second upright (2), causing the upward or downward sliding of the slider (6) inside said vertical longitudinal groove (T). It must be noted that the vertical centering step can also provide for rotating the lever (50) in such a way to couple the centering button (5) with the first hole (21). After the vertical centering step, a locking step is performed, wherein the second mounting device (200) is locked to the second upright, causing the 90° rotation of the pin (4) of the locking means of the second mounting device (200).

After mounting the two mounting devices (100, 200) on the two uprights (1, 2), the crosspiece can be raised and disposed in horizontal position, being supported on the first raised support surfaces (71) of the two mounting devices (100, 200) by means of a positioning step, as shown in Fig. 9.

When the crosspiece (3) is supported by the raised support surfaces (71), a sequence of pushing steps is formed, as described in the following list.

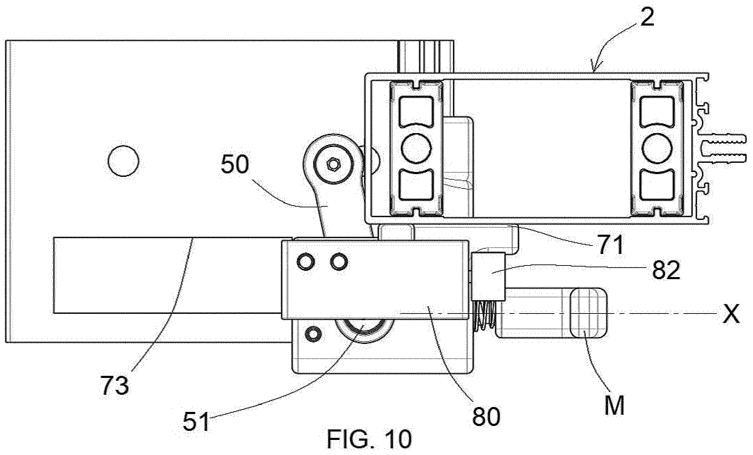

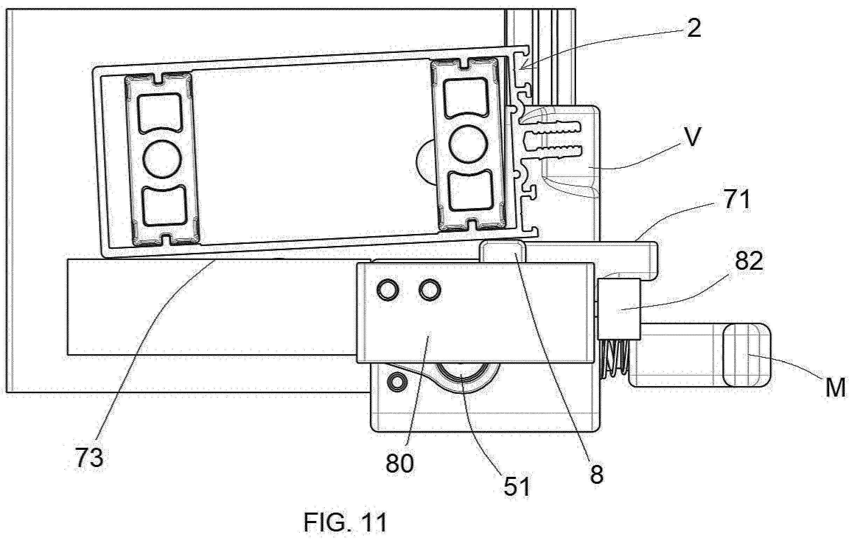

The pushing steps comprise:
- a first pushing step, wherein the crosspiece (3) is pushed between the two uprights (1, 2) until the second button (33) of the first end (E1) of the crosspiece (3) and the second button (34) of the second end (E2) of the crosspiece (3) are (almost) simultaneously brought in contact with the invitation surface (V) of the first device (100) and with the invitation surface (V) of the second device (200);
- a second pushing step, wherein the crosspiece (3) is additionally pushed between the two uprights (1, 2), making the second buttons (33, 34) of the crosspiece (3) slide against the invitation surfaces (V) until the second buttons (33, 34) are completely retracted inside the crosspiece (3), starting to position a portion of the crosspiece (3) between the two uprights (1, 2);
- a third pushing step, wherein the crosspiece (3) is additionally pushed until it (almost) simultaneously intercepts the levers (50) of the two mounting devices (100, 200), as shown in Fig. 10;
- a fourth pushing step, wherein the crosspiece (3) is additionally pushed, releasing the two centering buttons (5) of the two levers (50) of the two mounting devices (100, 200), causing the downward rotation of the levers (50);
- a fifth pushing step, wherein the crosspiece (3) is additionally pushed in such a way to bring the first button of the first end (E1) of the crosspiece (3) and the first button (32) of the second end (E2) of the crosspiece (3) in contact with the invitation surface (V) of the first mounting device (100) and with the invitation surface (V) of the second mounting device (200);
- a sixth pushing step, wherein the crosspiece (3) is additionally pushed, making the first buttons (31, 32) of the crosspiece (3) slide against the invitation surfaces (V) until the first buttons (31, 32) are completely retracted inside the crosspiece (3);
- a seventh pushing step, wherein the crosspiece is completely pushed between the two uprights (1, 2) until the second buttons (33, 34) of the crosspiece (3) are released inside the second holes (12, 22) of the connection walls (C1, C2) of the two uprights (1, 2), as shown in Fig. 11.

With reference to Fig. 12, after completing the aforementioned pushing steps, a lowering step is performed, wherein the crosspiece is lowered, disengaging the safety button (8) until the crosspiece (3) is supported on the second support surfaces (72) and until the first buttons (31, 32) of the crosspiece (3) are released inside the first holes (11, 21) of the connection walls (C1, C2) of the two uprights (1, 2).

It must be noted that the disengagement of the safety button (8) is obtained by making the safety button (8) slide from its retracted position to its advanced position, in such a way that the crosspiece (3) is no longer supported and descends by gravity until it is stopped on the second support surface (72).

Alternatively, if the safety button (8) is disposed next to said second support surface (72) and is configured in such a way to translate along an axis orthogonal to the first raised support surface (71) and to the second raised support surface (72), then, in such a case, the crosspiece (3) is pushed downwards and lowered, in such a way that the crosspiece (3) is supported on the second support surface (72) and the first buttons (31, 32) are inserted in said first holes (11, 21) of the uprights.

Further to the preceding description, the advantages of the kit for mounting a crosspiece (3) between two uprights (1, 2) are evident.

In particular, when the crosspiece (3) is supported on the first raised support surface (71) of the first mounting device and of the second mounting device (100, 200), the insertion between the two uprights (1, 2) can be automatically performed by simply pushing the crosspiece (3) between the two uprights (1, 2).

In particular, because of the provision of the invitation surface (V), the buttons (31, 32, 33, 34) can be automatically inserted in the crosspiece without requiring the user to manually push the buttons inside the crosspiece (3).

Moreover, because of the provision of the support surfaces (71, 72, 73), the crosspiece (3) is constantly guided in a firm, controlled way between the two uprights (1, 2).

Furthermore, because of the provision of the support surfaces (71, 72, 73) and of the invitation surfaces (V), the crosspiece (3) can be inserted and mounted by only one operator, who can hold and push the crosspiece (3) centrally. The presence of two operators to hold and push the crosspiece (3) at its ends, as provided according to the prior art, is not necessary.

The present invention also relates to an assembly that comprises two uprights (1, 2), a crosspiece (3) suitable for being inserted between said two uprights (1,2) and a kit with the aforementioned characteristics.

Numerous variations and modifications can be made to the present embodiment of the invention, which are within the reach of an expert of the field, falling in any case within the scope of the invention as disclosed by the appended claims.

## Claims

1. Kit for mounting a crosspiece (3) between a first upright (1) and a second upright (2); wherein each upright (1, 2) comprises a connection wall (C1, C2) that is directed towards the connection wall (C1, C2) of the other upright (1, 2); each connection wall comprises at least one hole (11, 12, 21, 22); each upright (1, 2) comprising a fixing wall (A1, A2) disposed in adjacent position relative to the connection wall (C1, C2); said crosspiece (3) comprising a first end (E1) suitable for being stopped against said connection wall (C1) of the first upright (1), and comprising a second end (E2) suitable for being stopped against said connection wall (C2) of the second upright (2); each end (E1, E2) comprising at least one button (31, 32, 33, 34) suitable for being inserted in said at least one hole of the connection wall (C1, C2) of each upright (1, 2);
**characterized in that**
said kit comprises at least one mounting device (100, 200) that can be fixed to one of said two uprights (1, 2) to guide the insertion of the crosspiece (3) between the two uprights (1, 2); said mounting device (100, 200) comprising:
- horizontal centering means (O) for horizontally centering the mounting device (100, 200) relative to an upright (1, 2);
- a stop surface (60) provided with said horizontal centering means (O); said stop surface (60) being suitable for stopping against the fixing (A1, A2) of the upright (1, 2);
- a locking means suitable for locking said mounting device (100; 200) to said upright (1, 2);
- a vertical centering button (5) that slides along an axis (Z); said centering button (5) being configured in such a way to be inserted in said at least one hole (11, 21) of the connection wall (C1, C2) of the upright (1, 2);
- a mobile lever (50), preferably rotating and hinged along an axis (Z1) parallel to the axis (Z) whereon the centering button (5) slides; said lever (50) being provided with one end where said centering button (5) is disposed;
- at least one support surface (71,72) that acts as support for the crosspiece (3) during the insertion of the crosspiece (3) between the two uprights (1, 2);
- an invitation surface (V) configured in such a way to be intercepted by said at least one button (31, 32, 33, 34) of the end (E1, E2) of the crosspiece (3) during the positioning of the crosspiece (3) between said two uprights (1, 2); said invitation surface (V) being configured in such a way to completely introduce said at least one button (31, 32, 33, 34) inside the crosspiece (3).

2. The kit of claim 1, wherein said centering button (5) comprises one end (5a) suitable for being inserted inside the first hole (11, 21) of the connection wall (C1, C2); said end (5a) being flared like a striker of a door lock.

3. The kit of any one of the preceding claims, wherein said horizontal centering means (O) comprise at least one slide (6) configured in such a way to slide inside a vertical longitudinal groove (T) obtained in the fixing wall (A1, A2) of the upright (1,2).

4. The kit of any one of the preceding claims, wherein said locking means comprises a pin (4) with a head (41) that ends in said stop surface (60) of the mounting device (100, 200) and is suitable for being inserted in a groove obtained on the fixing wall (A1, A2) of an upright (1, 2); said head (41) having a radial striker (411); said pin (4) revolving relative to an axis (X).

5. The kit of any one of the preceding claims, wherein said at least one support surface (71, 72) comprises:
- a first raised support surface (71) that acts as support for the crosspiece (3) during the insertion of the crosspiece (3) between the two uprights (1, 2);
- a second support surface (72); said crosspiece (3) being suitable for resting on said second support surface (72) when the crosspiece (3) is fixed to the two uprights (1, 2).

6. The kit of claim 5, comprising a safety button (8); said safety button (8) being disposed next to said second support surface (72); said safety button (8) being suitable to be in an operating position, wherein the safety button (8) projects in upper position relative to said first raised support surface (71), and an idle position, wherein said safety button (8) is flush or disposed under said second support surface (72).

7. The kit of claim 5, comprising a safety button (8); said safety button (8) sliding along an axis (X1) parallel to the axis (X) whereon said pin (4) of the locking means rotates; said safety button (8) sliding between a retracted position, wherein said safety button (8) is disposed next to said second support surface (72), and an advanced position, wherein said safety button (8) is disposed next to said first raised support surface (71).

8. The kit of any one of claims 3 to 7, wherein said slider (6) comprises a tooth (61) that projects radially from said slider (6), and a recess (62) obtained in diametrically opposite position to said tooth (61).

9. The kit of any one of the preceding claims, wherein said at least one mounting device (100, 200) also comprises an additional support surface (73) in coplanar position as a continuation of said second support surface (72); said additional support surface (73) comprises a notch (74) suitable for housing said end of the lever (50) when said end of the lever (50) is disposed under said additional support surface (73).

10. The kit of any one of the preceding claims, comprising two of said at least one mounting device (100; 200), of which a first mounting device (100) is fixed to the first upright (1), and a second mounting device (200) is fixed to the second upright (2).

11. Assembly comprising a kit according to claim 10 and additionally comprising:
- a first upright (1) and a second upright (2), wherein each upright (1, 2) comprises a connection wall (C1, C2) that is directed towards the connection wall (C1, C2) of the other upright (1, 2); each connection wall (C1, C2) comprises at least one hole (11, 21, 12, 22); each upright (1, 2) comprising a fixing wall (A1, A2) disposed in adjacent position to the connection wall (C1, C2);
- a crosspiece (3) comprising a first end (E1) suitable for being stopped against said connection wall (C1) of the first upright (1), and comprising a second end (E2) suitable for being stopped against said connection wall (C2) of the second upright (2); each end (E1, E2) comprising at least one button (31, 32, h33, 34) suitable for being inserted in said at least one hole (11, 21, 12, 22) of the upright (1, 2).

12. The assembly of claim 11, wherein each upright (1, 2) comprises a vertical longitudinal groove (T) obtained in said fixing wall (A1, A2).

13. The assembly of claim 12, wherein said slider (6) of the horizontal centering means (O) of the first mounting device (100) is inserted in said vertical longitudinal groove (T) of the first upright (1); said slider (6) of the horizontal centering means (O) of the second mounting device (200) being inserted in said vertical longitudinal groove (T) of the second upright (2).

14. The assembly of claim 12 or 13, wherein said head (41) of the pin (49 of the locking means of the first mounting device (100) is inserted in said vertical longitudinal groove (T) of the first upright (1); said head (41) of the pin (4) of the locking means of the second mounting device (200) being inserted in said vertical longitudinal groove (T) of the second upright (2).

15. The assembly of any one of claims 11 to 14, wherein said at least one hole (11, 12, 21, 22) of the connection wall (C1, C2) of each upright (1, 2) comprises two holes (11, 12, 21, 22), of which a first hole (11,21) and a second hole (12, 22); said at least one button (31, 32, 33, 34) of each end (E1, E2) of the crosspiece (3) comprises two buttons, of which a first button (31, 32) and a second button (33, 34); said first and second button (31, 33) of the first end (E1) being inserted in said first and second hole (11, 12) of the connection wall (C1) of the first upright (1); said first and second button (32, 34) of the second end (E2) being inserted in said first and second hole (21, 22) of the connection wall (C2) of the second upright (2).

16. Process for using a kit according to claim 10; said process comprising the following steps:
- horizontal centering of the first mounting device (100), wherein the slider (6) of the horizontal centering means (O) of the first mounting device (100) is inserted in the vertical longitudinal groove (T) of the first upright (1);
- vertical centering of the first mounting device (100), wherein the centering button (5) of the first mounting device (100) is inserted in the first hole (11) of the connection wall (C1) of the first upright (1), making the slider (6) slide upwards or downwards inside said vertical longitudinal groove (T);
- locking the first mounting device (100), wherein the first mounting device (100) is locked to the first upright, causing the rotation of the pin (4) of the locking means of the first mounting device (100);
- horizontal centering of the second mounting device (200), wherein the slider (6) of the horizontal centering means (O) of the second mounting device (200) is inserted in the vertical longitudinal groove (T) of the second upright (2);
- vertical centering of the second mounting device (200), wherein the centering button (5) of the second mounting device (200) is inserted in the first hole (21) of the connection wall (C2) of the second upright (2), causing the upward or downward sliding of the slider (6) inside said vertical longitudinal groove (T);
- locking the second mounting device (200), wherein the second mounting device (200) is locked to the second upright, causing the rotation of the pin (4) of the locking means of the second mounting device (200);
- disposing the crosspiece (3) in horizontal position on the first raised support surfaces (71) of the two mounting devices (100, 200);
- first pushing, wherein the crosspiece (3) is pushed between the two uprights (1, 2) until the second button (33) of the first end (E1) of the crosspiece is (almost) simultaneously stopped and the second button (34) of the second end (E2) of the crosspiece (3) is in contact with the invitation surface (V) of the first device (100) and the invitation surface (V) of the second device (200);
- second pushing, wherein the crosspiece (3) is additionally pushed between the two uprights (1, 2), causing the sliding of the second buttons (33, 34) of the crosspiece (3) against the invitation surfaces (V) until the second buttons (33, 34) are completely received, starting to position a portion of the crosspiece (3) between the two uprights (1, 2);
- third pushing, wherein the crosspiece (3) is additionally pushed until it (almost) simultaneously intercepts the levers (50) of the two mounting devices (100, 200);
- fourth pushing, wherein the crosspiece (3) is additionally pushed, releasing the two centering buttons (5) of the two levers (50) of the two mounting devices (100, 200), and consequently rotating the levers (50) downwards;
- fifth pushing, wherein the crosspiece (3) is additionally pushed in such a way to bring the first button of the first end (E1) of the crosspiece (3) and the first button (32) of the second end (E2) of the crosspiece (3) in contact with the invitation surface (V) of the first device (100) and with the invitation surface (V) of the second device (200);
- sixth pushing, wherein the crosspiece (3) is additionally pushed, causing the sliding of the first buttons (31, 32) of the crosspiece (3) against the invitation surfaces (V) until the first buttons (31, 32) are completely received;
- seventh pushing, wherein the crosspiece is completely pushed between the two uprights (1, 2) until the second buttons (33, 34) of the crosspiece (3) are released inside the second holes (12, 22) of the connection walls (C1, C2) of the two uprights (1, 2);
- lowering, wherein the crosspiece (3) is lowered, releasing the safety button (8) until the crosspiece (3) is supported on the second support surfaces (72) and the first buttons (31, 32) of the crosspiece (3) are released inside the first holes (11, 21) of the connection walls (C1, C2) of the two uprights (1, 2).
